# EUROPEAN PATENT SPECIFICATION

(11) **EP 2 535 096 B1**
(45) Date of publication and mention of the grant of the patent: **30.12.2015**
(21) Application number: 11382198.7
(22) Date of filing: 15.06.2011
(51) Int. Cl.: B01D 3/10, C02F 1/04

(54) **SYSTEM AND ITS USE FOR DESALINATING SEAWATER**
SYSTEM UND SEINE VERWENDUNG ZUR ENTSALZUNG VON MEERWASSER
SYSTÈME ET SON UTILISATION DE DÉSALINISATION DE L'EAU DE MER

(43) Date of publication of application: 19.12.2012
(73) Proprietor: Centre Internacional de Métodes Numérics en Enginyeria, 08034 Barcelona (ES)
(72) Inventor: Arnau del Amo, Pedro Antonio, 08800 Vilanova i la Geltrú (ES); Oñate Ibáñez de Navarra, Eugenio, 08022 Barcelona (ES); Hanganu, Dan Alexandru, 08294 El Bruc (ES)
(74) Representative: ZBM Patents - Zea, Barlocci & Markvardsen

(56) References cited:
- CH-A- 406 992
- DE-A1- 2 202 260
- FR-A1- 2 265 430
- US-A- 3 630 854
- US-A- 5 306 397
- US-A1- 2003 188 962
- US-A1- 2006 157 335

## Description

The invention relates to a system for desalinating seawater having an evaporation part that comprises an evaporation chamber in which seawater boils at a subatmospheric pressure. The invention also relates to a method for desalinating seawater with such a system.

### BACKGROUND ART

Most desalination plants are big energy consumers and have a poor energetic efficiency. Besides, the water-demanding areas may be inland, far from the sea, and it is often not feasible to transport the desalinated water across big distances.

The paper "Feasibility study of desalination technology utilizing the temperature difference between seawater and inland atmosphere", by Inoue et al., Desalination 197 (2006), addresses these problems and discloses a desalination facility comprising an evaporation part where evaporation of raw seawater takes place at low pressure, a condensation part where vapour condenses and distilled water is delivered, and a transport part between the evaporation part and the condensation part where vapour is transported at low pressure. The transport part (which is a pipe) has thermal insulation. The evaporation part is placed by the sea, where the daily thermal range is small, and the condensation part is placed in an inland area where the temperature rapidly decreases at night because of radiation cooling. Air is extracted from the transport part and the latter is filled with water vapour, which then flows towards the condensation part because its temperature is lower than the temperature of the evaporation part.

But the paper itself signals that "there are a number of technical concerns regarding possible negative effect of scaling-up of the system", such as "the difficulty to obtain initial vacuum in a very long pipe". Besides, since raw water contains incondensable gases (air), the increasing contamination of the system with incondensable gases reduces the rate of condensation in the condenser, thereby lowering the energetic efficiency of the system.

Another drawback is that insulating the transport part is very expensive because the pipe can be very long.

Document US3630854 discloses a desalination system comprising a barometric degasser followed by an evaporator.

### SUMMARY OF THE INVENTION

It is an object of the present invention to provide a system and a method that overcome said drawbacks.

According to a first aspect of the invention, the evaporation part further comprises a tank of deaerated seawater at substantially the same subatmospheric pressure than the evaporation chamber which feeds deaerated seawater to said evaporation chamber. As only deaerated water is evaporated, only pure steam will reach the condenser and nothing will impair the condensation. And since the tank of deaerated water is at the same pressure than the evaporation chamber, little energy is required to circulate the water between them.

The evaporation part preferably comprises a first hydraulic circuit of deaerated seawater at said subatmospheric pressure to which the tank of deaerated seawater and the evaporation chamber belong, a second hydraulic circuit of raw seawater at atmospheric pressure which starts and ends in the sea, and a heat exchanger between said primary circuit and said secondary circuit such that the secondary circuit delivers to the primary circuit the heat lost in the evaporation of water that takes place in the evaporation chamber.

In an embodiment, the evaporation part comprises at least two such tanks of deaerated seawater so that at any given time one of said tanks belongs to the primary circuit while the other is disconnected therefrom for replenishment. In this way, the evaporation can proceed without interruptions.

In an embodiment, the tank or tanks of deaerated seawater are located at substantially the same height than the evaporator chamber and at least ten metres above the sea level, so that little energy is required for the circulation of water through the primary circuit.

A reservoir of deaerated seawater at atmospheric pressure may be located at a lower height than the tank or tanks of deaerated seawater, the difference in height being such that the water column head of a filled tube between any tank of deaerated seawater and the lower reservoir of deaerated seawater causes the subatmospheric pressure in the primary circuit. This is why the upper tank or tanks of deaerated seawater are 10 or more meters above the sea level.

In an embodiment, the secondary circuit comprises a tank of raw seawater at atmospheric pressure located at substantially the same height than the reservoir of deaerated seawater, and used for the production of deaerated seawater.

The secondary circuit may also comprise a tank of brine at atmospheric pressure that receives the saline water from the tank of deaerated seawater that is temporarily disconnected from the primary circuit, and delivers it back to the sea, continuously diluted into the return to the sea from the secondary circuit.

Advantageously, the tank of raw seawater and the tank of brine are located at substantially the same height, so that little energy is required for the circulation of water through the secondary circuit.

The system comprises a condenser and a pipeline that connects the evaporation chamber to said condenser, the condenser and the pipeline being also at a subatmospheric pressure, and the outlet of the condenser being a water column seal (i.e., a water column about 10 m high).

The system preferably comprises a hydraulic electricity generator which is located after and below the condenser and is driven by the water delivered by the latter after a gravitational fall. In this way the system can produce more energy than it consumes, taking it from the heat of the sea.

In an embodiment, the pipeline comprises a plurality of steams traps for collecting the liquid water that may condense inside the pipeline, each steam trap being formed as a water column seal. The pipeline does not need insulation because the water possibly condensed therein is simply collected gravitationally.

In an embodiment, the evaporation part comprises a boiler to produce steam at atmospheric or higher pressure, said steam being intended to drag and evacuate the air initially present in the pipeline. Said boiler may be located in the evaporation chamber.

The system may comprise an array of evaporation parts, or an array of condensers. Each of these arrays may ave one, two or three dimensions (in a topological sense). Such arrangements make the system more robust to disruptions and enhance the coordination between offer and demand of fresh water.

According to a second aspect of the invention, in a method for desalinating seawater with such a system the replenishment of the tank of deaerated seawater temporarily disconnected from the primary circuit comprises the steps of:
(i) filling said tank of deaerated seawater with water from the tank of raw seawater and letting the air go out through an upper valve of the tank of deaerated seawater;
(ii) with said upper valve closed, transferring, preferably by gravitationally draining, a volume of water from the tank of deaerated seawater into the tank of raw seawater thereby creating a vacuum in the former tank;
(iii) allowing some time for the degassing of the seawater in the tank of deaerated seawater;
(iv) with the connection between the tank of raw seawater and the tank of deaerated seawater closed, refilling the latter with water from the reservoir of deaerated seawater and letting the air go out through the upper valve;
(v) with the upper valve closed, transferring, preferably by gravitationally draining, a volume of deaerated seawater from the tank of deaerated seawater into the reservoir of deaerated seawater thereby again creating a vacuum in said tank;
(vi) repeating the steps (iii) to (v) several times.

This deaeration method consumes much less energy than deaeration methods which comprise heating the liquid. In any case, and thanks to the absence of air in the seawater to be evaporated, the water vapour transported through the pipeline is substantially devoid of incondensable gases.

Preferably, the steps (iii) to (v) are repeated at least eight times.

Advantageously, the level of the subatmospheric pressure in the primary circuit is selected to allow the deaerated seawater in the evaporation chamber to boil at ambient temperature.

In an embodiment, air is initially evacuated from the pipeline by injecting the steam produced by the boiler until there is only hot steam in the pipeline, letting the steam to cool and collecting the condensed water through the steam traps of the pipeline. Said boiling is only performed once, before the actual start of the evaporation and condensation process.

Therefore, the system transfers heat from a hot source (the sea) to a cold sink (e.g. a mountain). This heat is partially converted in the potential energy of water stored at a height. So the system is a thermal engine the thermal agent of which is water vapour. The energy conveyed by the vapour is released when the vapour condenses. The rate of condensation defines the power of the system. The delivered power is given by the gain of potential energy of the condensate and is more than enough for the operation of the system, which thus consists of the production of fresh water and energy. The subsystem formed by the primary circuit, the pipeline and the condenser is under vacuum (about 30 mb), airtight and devoid of air because the seawater in the primary circuit is deaerated. The secondary circuit, which contains raw seawater at atmospheric pressure, delivers the heat lost in the evaporation, so that the temperature in the evaporation chamber does not fall below the boiling temperature at 30 mb. The vacuum in the primary circuit is a consequence of it being located higher than the reservoir of deaerated seawater and the tank of raw seawater.

### BRIEF DESCRIPTION OF THE DRAWINGS

Some particular embodiments of the present invention will be described in the following, only by way of non-limiting example, with reference to the appended drawings, in which:
figure 1 is a schematic diagram of the evaporation part of the system;
figure 2 is a schematic view of the transport part of the system; and
figure 3 is a schematic view of the condensation part of the system.

### DESCRIPTION OF PARTICULAR EMBODIMENTS

An embodiment of the system for desalinating seawater of the present invention comprises an evaporation part EP, a condenser C and a pipeline P that connects the condenser to the evaporation part, more specifically, to an evaporation chamber EC of the evaporation part EP. Besides the evaporation chamber EC, the evaporation part of the system (where seawater evaporates and yields water vapour -steam- that is subsequently transported to the condenser C through the pipeline P) comprises two upper tanks D11 and D12 for deaerated seawater, a lower reservoir D02 for deaerated seawater, a tank of brine D03 and a tank of raw seawater D01.

The evaporation chamber EC works under vacuum, i.e., at a pressure lower than the atmospheric pressure, also called subatmospheric pressure, specifically at a pressure not higher than the vapour pressure of water at ambient temperature, so that the seawater in the evaporation part boils at ambient temperature.

In operation, one of the upper tanks D11 or D12 forms a hydraulic closed circuit with the evaporation chamber EC, while the other tank is first emptied (and perhaps cleaned) and then replenished in a way to be explained later; in a subsequent step the latter tank forms the hydraulic closed circuit with the evaporation chamber EC while the former tank is emptied and replenished. Thus, the water which is evaporated in the evaporation chamber EC is the deaerated seawater from either the upper tank D11 or the upper tank D12. The hydraulic closed circuit formed by the evaporation chamber EC and either the upper tank D11 or the upper tank D12 is called the primary circuit.

The tank of raw seawater D01 and the tank of brine D03 form another hydraulic circuit, which is closed by the sea S; this is called the secondary circuit. In operation, water is pumped from the sea into the tank of raw seawater D01, is pumped from the latter to the tank of brine D03 and, from there, is delivered back to the sea.

As the seawater of the upper tank D11 or D12 is evaporated in the evaporation chamber EC, its salinity increases. When the salinity of the water in, say, D11 goes beyond a certain value, D11 is disconnected (timed out) from the primary circuit and D12 is connected into the primary circuit. Then D11 is emptied into the tank of brine D03, it is perhaps cleaned and it is replenished with deaerated seawater partly coming from the reservoir D02; the seawater is deaerated according to a procedure to be explained later. The tank D03 is for brine because it receives the saline water from D11 or D12.

The water of the primary circuit loses heat in the evaporation that takes place in the evaporation chamber EC. But, as will be explained later, for the correct operation of the system the temperature in the evaporation chamber EC must be higher than the temperature in the condenser C. To compensate for the heat lost in the evaporation chamber, a heat exchanger H is interposed between the primary circuit and the secondary circuit, whereby the raw water from the sea gives heat to the deaerated seawater of the primary circuit.

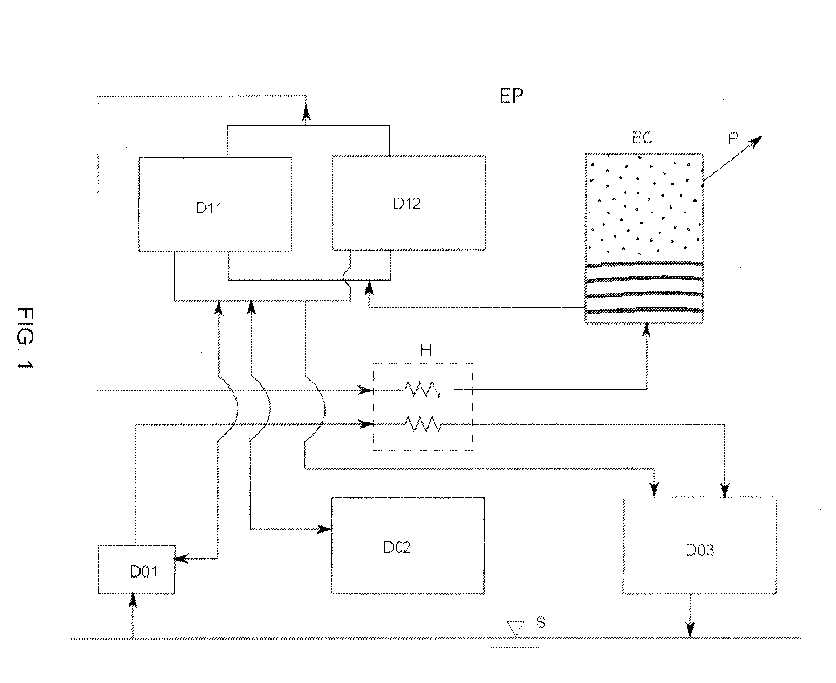

Figure 1 also shows the tubes between all the elements of the evaporation part EP, the arrows indicating the sense of the flow; the required pumps and valves are not showed.

The easiest and cheapest way of collecting warm seawater is to use a suction device submerged in an area where the water is at the desired temperature and in sufficient quantities. A pipeline will lead the seawater ashore by pumping.

The evaporation part EP is the heart of the desalination system and it is preferably located on the shoreline in a complex of facilities placed at 3 elevations: +0, +5 m and +10 m, the zero metre level being at a certain (short) height relative to the sea level.

At the bottom level, level 0, there may be:
- The normal pressure tank D01 for warm raw seawater fed from the collection part with its pump.
- The normal pressure reservoir D02 for deaerated seawater with its pump.
- A booster pump for the secondary circuit after the tank D01.
- The normal pressure tank of brine D03 with drainage to open sea.

At the intermediate level, height +5, there may be the heat exchanger H between the primary circuit and the secondary circuit.

At the top level, height +10, there may be:
- The evaporation chamber EC.
- The two depressurized upper tanks D11 and D12 for deaerated water, connected in parallel to the primary circuit, behind EC, and connected to the tanks D01 and D03 and the reservoir D02 through a common one-way reversible waterpipe.

For the sake of clarity, in figure 1 the tanks D11 and D12 are shown connected to the tanks D01 and D03 and the reservoir D02 by three different tubes, and this is a possible arrangement indeed, but, as explained, these three tubes can be reduced to a common one-way reversible tube because at any given time there is only one connection operating between one top level tank and one bottom level tank or reservoir.

The primary circuit works under vacuum. This vacuum is effected by a water column head of about 10 metres between the upper tank D11 or D12 and the reservoir D02, the latter being at atmospheric pressure and the former being sealed to the atmosphere. That is, the upper tanks D11 and D12 are 10 metres higher than the reservoir D02 and, hence, the pressure in the upper tank D11 or D12 is almost zero.

The primary circuit is then a closed and depressurized hydraulic circuit formed by tubes where deaerated seawater circulates continuously. The primary circuit continuously receives heat through the heat exchanger H where warm seawater arrives from the collection part and is returned to the sea through the tank D03. The intensity of heat transfer can be controlled in order to optimize the cost of pumping by varying the flow rates of the two circuits, primary and secondary, through an active control system.

Each of the upper tanks D11 and D12 may contain about 80% of the water volume of the primary circuit. Only one of them will be connected to the primary circuit at any time and they may have sufficient volume to ensure the operation of the evaporation chamber EC for, say, one hour before switching between them. When disconnected from the primary circuit, they will discharge the brine in the tank of brine D03 and start degassing (deaerating) seawater from the tank of raw seawater D01 and keep the lower tank of deaerated seawater D02 full. In less than say, one hour, they may be filled again with deaerated seawater to take over and be reconnected to the primary circuit.

While the primary circuit is depressurized, the secondary circuit works at normal (atmospheric) pressure. As the secondary circuit starts and ends in the sea, the cost of pumping seawater through it is minimized.

By discharging in the tank D03, the brine is offset and can smoothly return to the sea because the resulting salinity is undetectably greater than the original. This will prevent any environmental impact.

The deaeration procedure is based on bringing the water to boil at low pressure repeatedly in a separate enclosure and evacuating the produced gases. The degassing is carried out in the upper tank D11 and D12 during their disconnections from the primary circuit. The procedure is as follows:
a) an upper valve of the upper tank D11 or D12 is opened;
b) the upper tank is filled with raw seawater from the tank D01;
c) the upper valve is closed when all the air is evacuated;
d) the upper tank is gravitationally drained into the lower tank D01, which is at atmospheric pressure 10 metres below, whereby the pressure in the upper tank falls to almost zero and more gas is drawn therein (some dissolved air goes up to the void volume because of the pressure differential and becomes undissolved);
e) the upper tank is partially filled with water from the reservoir of deaerated seawater D02;
f) the upper valve is opened and more water is pumped from the reservoir D02 into the upper tank;
g) the upper valve is closed when all the air is evacuated;
h) the upper tank is gravitationally drained into the reservoir D02, which is at atmospheric pressure 10 metres below;
i) the steps (f) to (h) are repeated several times, so that the water in the upper tank becomes sufficiently deaerated.

The volume of water drained from the upper tank D11 or D12 may be substantially equal to the volume of the tube between said upper tank and the tank D01 or the reservoir D02.

The water vapour created inside the evaporation chamber EC travels through the steam pipeline P to find the proper conditions to condense in the condenser C. The temperature of the water vapour is the same as that of the water from which it originated and can only condense at temperatures below that if the pressure remains constant. If the pressure lowers because the pipeline climbs on a mountain, the vapour temperature lowers as well. In this case, the condenser temperature must be below the vapour temperature decreased by the loss of pressure due to gravity.

The eventual condensation inside the pipeline P will transfer latent heat to the pipe walls and keep them at the same temperature as the water vapour. If, however, the tube is heated in the sun, this does not create any problem. The pipeline does not require any thermal insulation, since the purpose of the whole system is to condense the water vapour extracted from seawater by any means. The pipeline is in search of the cold source needed to condense its content of water vapour, but if it finds it before reaching the condenser, within the pipeline itself, then the aim is accomplished sooner.

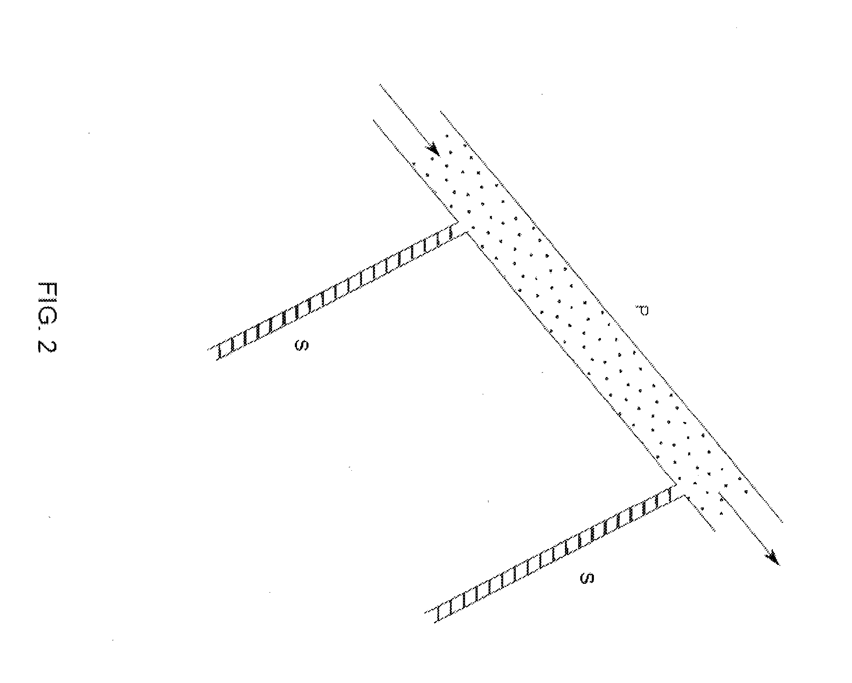

The condensation inside the tube can cause integrity problems, because the formation of large droplets of liquid water, travelling at Mach 1, can sting and pierce any materials, including hardened steel. To prevent this problem and collect the condensed water, "steam traps" S (fig. 2) may be installed every 100 metres or so to collect the water accumulated in depressions especially designed for the purpose. The water would be drained through small pipes whose lower ends dimensions are about 11 m below the level of the corresponding steam trap. These pipes would get filled with water, which is left enclosed until the pipe is at normal operating parameters filled with a 10 metres high column of water, when the lower valves are opened. The 10 metres of water column head acts as a passive tap, counteracting the almost zero pressure within the main pipeline, only letting out any excess water entering the steam trap. There is no need for any intervention, as this setup functions as a passive automatism.

The initial evacuation of the air from the inside vapour pipeline is performed by injecting steam at high speed in normal pressure conditions. This is achieved by connecting the pipe to a boiler of sufficient power which produces a sufficient flow of steam. The exit velocity of steam at the far end must be greater than the speed of descent of air into the steam. The air density is 1.2 kg/m³ while that of the water vapour is 0.8 kg/m³, resulting in the sinking of air in water vapour. The operation time is given by the length of the tube and the relative velocity of rising air inside the tube (which falls with respect to the rising vapour). When the tube contains only water vapour, the valves at both ends (which may be located tens or hundreds of km far from each other) of the pipeline are simultaneously closed and the pipeline is left to cool. The vapour will condense on the walls (where it is disposed of by the steam traps) and then just saturated water vapour, according to the temperature of the pipeline, and no incondensable gas will be left inside the pipeline.

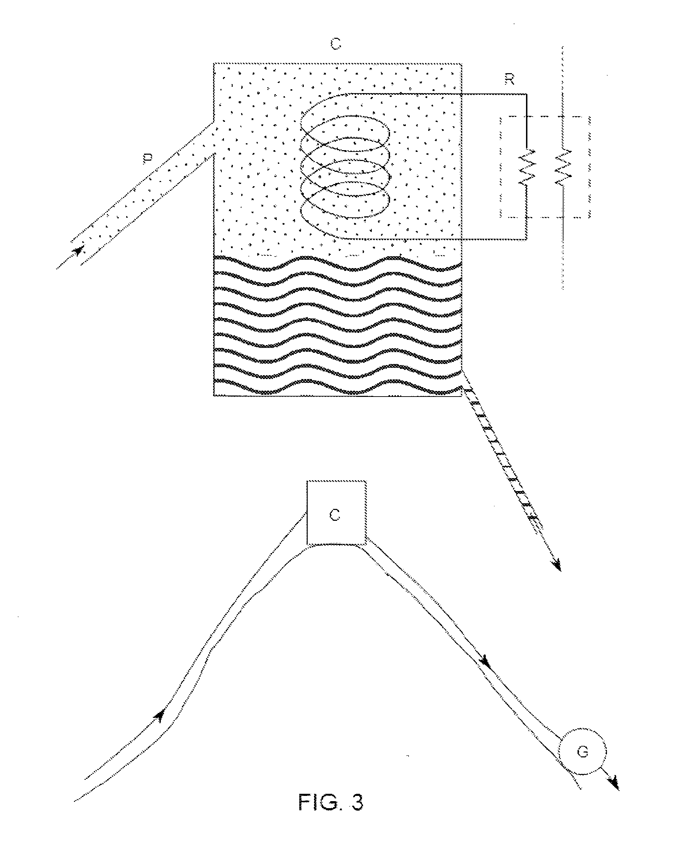

The condensation process is the most flexible and adaptable of the entire system and it depends on the local physical geography and climate. The cold source may be provided by using natural sources such as deep seawater, wells, wind, high mountain cold air, etc. It is to be understood that the condenser C shown in figure 3 is just an schematic representation that does not preclude any particular arrangement. Figure 3 schematically shows a heat exchanger R which transfers heat from within the condenser C to the cold surroundings.

The freshwater tank is located at high altitude and from there the water can go down a penstock to a power plant G (figure 3) where it can produce considerably more electricity than it has been spent in the entire process; the energy is taken from the heat stored in the sea. Finally, the water can be mineralized and distributed to customers.

The dimensioning of the condenser pipes is done taking into account the expected temperature difference, the thermal conductivity of the tubes, the convection coefficient between the metal and air and finally the estimated wind speed. All these parameters lead to obtaining the necessary pipe surface needed to dissipate the latent heat of steam. It is essential to ensure that all the steam that comes up will condense instantly, in order to keep the entire facility at maximum capacity.

In principle, this system works as long as the heat source temperature is higher than the cold source, however small the difference. As the installation contains only water vapour, the internal pressure gets spontaneously to the value of the vapour pressure associated with local temperature. This means that the tendency of the system is being saturated with water vapour. This is the position of stable equilibrium of the system and it responds to any disturbance trying to get back to the stable configuration.

If the temperature drops or the pressure rises, the excess steam is condensed at once, allowing the downward adjustment of the pressure according to the equilibrium state. If the temperature rises or the pressure lowers, the vapour gets unsaturated and will try to increase pressure at the expense of evaporating liquid water if available or steal vapour molecules until reaching the density (pressure) that corresponds to its new state.

In conclusion, the operating temperature self-adjusts itself in all parts of the installation, which greatly simplifies matters and lowers costs.

The system according to the invention obtains fresh water from seawater by distillation at ambient temperature, using the properties of water and steam to do it without need of any external energy. The operation of the method requires a hot source of seawater and a cold sink to condense the obtained steam. The ideal setup would be a mountainous coastal area, but the system can be deployed elsewhere as well.

In brief, the proposed desalination process may be as follows:
1. The seawater is captured and pumped into a coastal plant (evaporation part EP) located on a cliff at 10 m above sea level.
2. Seawater is deaerated and depressurized to near vacuum using only water pumps and valves.
3. The deaerated water is introduced into an evaporation chamber EC under vacuum where it boils at ambient temperature.
4. The vapour transport system pipeline P fills with saturated steam when connected to the evaporation chamber EC.
5. The condenser C is connected to the other end of the steam pipeline. The condenser is under the same vacuum conditions and is in direct contact with the cold sink.
6. Condensed freshwater is collected gravitationally in a tank located more than 10 m below the condenser.
7. The gravitational potential of the freshwater is used to produce electrical or mechanical energy.

The engine of this whole process is the heat accumulated in the oceans. Transporting this heat to the cold source generates mechanical work in the same way a heat engine does. Said work is used to drive the steam up to the condenser and is partially accounted for within the hydroelectric potential of the obtained water.

The system performance is governed by its vapour transport capacity. The aim is to maximize the flow of fresh water produced and therefore adequate conditions must be met, mainly airtightness and absence of incondensable gases (air) within the depressurized subsystem.

The steam flows from the evaporation chamber to the condenser, driven by the implosive condensation of water vapour, occurring within the condenser at the molecular velocity of water vapour, about 650 m/s. This violent implosion of water vapour is due to a change in volume of about 1500 times associated with phase change.

In the absence of other gases, water vapour tends to maintain its density uniform and this causes a redistribution of the gas molecules when the equilibrium state is disturbed. The condensation of the gas on a domain boundary corresponds to the sudden disappearance (instant implosion) of the gas in that area, creating an intense local void. The gas from other areas will move to redress the imbalance and in the absence of other gases will make it at the maximum possible speed.

The velocity of the steam inside the pipeline is the speed of sound in that gas, about 445 m/s at normal temperature. It is the speed of "choked flow", i.e., the speed above which reducing the pressure in the condenser ceases to increase gas flow. To make the system work with that performance the condenser must be adequately dimensioned to be able to absorb the latent heat associated with the maximum steam flow.

## Claims

1. System for desalinating seawater having an evaporation part (EP) that comprises an evaporation chamber (EC) and two tanks (D11, D12) for deaerated seawater for the evaporation chamber, **characterized by** also comprising a reservoir for deaerated seawater (D02) that is located at a level ten metres lower than the tanks for deaerated seawater (D11, D12) and is connected to one of them, the other tank for deaerated seawater being connected to the evaporation chamber to form a closed hydraulic circuit therewith, the tanks for deaerated seawater comprising an upper valve and being arranged in parallel in the closed hydraulic circuit and located at substantially the same height as said evaporation chamber and at least ten metres above the sea level, the evaporation part further comprising an open hydraulic circuit of raw seawater that starts and ends in the sea and comprises a tank for raw seawater (D01), located at substantially the same level than the reservoir for deaerated seawater (D02), and a tank for brine (D03) that is connected to one of the tanks for deaerated seawater and is located at substantially the same level than the tank for raw seawater (D01), and a heat exchanger (H) arranged between said two hydraulic circuits and located at a level five metres lower than the tanks for deaerated seawater.

2. System according to claim 1, which comprises a condenser (C) and a pipeline (P) that connects the evaporation chamber (EC) to said condenser, the outlet of the condenser being a water column seal.

3. System according to claim 2, wherein the pipeline (P) comprises a plurality of steams traps (S) for collecting the liquid water that may condense inside the pipeline, each steam trap being formed as a water column seal.

4. System according to any of the preceding claims, wherein the evaporation part (EP) comprises a boiler to produce steam at atmospheric or higher pressure.

5. System according to any of the preceding claims, comprising an array of evaporation parts (EP).

6. System according to any of the preceding claims, comprising an array of condensers (C).

7. Use of the system of claim 1 for desalinating seawater, wherein deaerated seawater is circulated in closed circuit between one of the tanks for deaerated seawater (D11, D12) and the evaporation chamber (EC), the pressure in said one tank and said chamber being not higher than the vapour pressure of water at the ambient temperature.

8. Use of the system of claim 1 according to claim 7, wherein the open hydraulic circuit delivers to the closed hydraulic circuit the heat lost in the evaporation of water that takes place in the evaporation chamber (EC).

9. Use of the system of claim 1 for desalinating seawater, the method comprising the steps of:
(a) disconnecting one of the tanks for deaerated seawater (D11, D12) from the closed hydraulic circuit and connecting the other tank for deaerated seawater to the closed hydraulic circuit;
(b) replenishing with deaerated seawater the tank for deaerated seawater disconnected from the closed hydraulic circuit;
(c) connecting the replenished tank for deaerated seawater to the closed hydraulic circuit and disconnecting the other tank for deaerated seawater therefrom.

10. Use of the system of claim 1 for deaerating seawater, the method comprising the steps of:
(i) filling one tank for deaerated seawater (D11; D12) with water from the tank for raw seawater (D01) and letting the air go out through the upper valve of said the tank of deaerated seawater;
(ii) with said upper valve closed, draining gravitationally a volume of water from said tank for deaerated seawater into the tank for raw seawater, thereby creating a vacuum in the former tank;
(iii) allowing some time for the degassing of the seawater in the tank for deaerated seawater;
(iv) with the connection between the tank for raw seawater and the tank for deaerated seawater closed, refilling the latter with water from the reservoir for deaerated seawater (D02) and letting the air go out through the upper valve;
(v) with the upper valve closed, draining gravitationally a volume of deaerated seawater from the tank for deaerated seawater into the reservoir for deaerated seawater thereby again creating a vacuum in said tank;
(vi) repeating the steps (iii) to (v) several times.

## Patentansprüche

1. System zur Entsalzung von Meerwasser, das einen Verdampfungsteil (EP) hat, welcher eine Verdampfungskammer (EC) und zwei Tanke (D11, D12) für entlüftetes Meerwasser für die Verdampfungskammer umfasst, **dadurch gekennzeichnet, dass** es auch ein Reservoir für entlüftetes Meerwasser (D02) umfasst, welches zehn Meter niedriger als die Ebene der Tanke für entlüftetes Meerwasser (D11, D12) gelegen ist und mit einem von diesen verbunden ist, wobei der andere Tank für entlüftetes Meerwasser mit der Verdampfungskammer verbunden ist um damit einen geschlossenen Hydraulikkreis zu bilden, wobei die Tanke für entlüftetes Meerwasser ein oberes Ventil umfassen und in parallel in dem geschlossenen Hydraulikkreis angeordnet sind und im Wesentlichen auf die gleiche Höhe als die Verdampfungskammer und mindestens zehn Meter über dem Meeresspiegel gelegen sind, wobei der Verdampfungsteil weiterhin einen offenen Rohmeerwasser-Hydraulikkreis umfasst, der im Meer anfängt und endet und einen Rohmeerwassertank (D01) umfasst, der im Wesentlichen auf der gleichen Ebene wie das Reservoir für entlüftetes Meerwasser (D02) gelegen ist, und einen Salzwassertank (D03) umfasst, der mit einem der Tanke für entlüftetes Meerwasser verbunden ist und der im Wesentlichen auf gleicher Ebene wie der Rohmeerwassertank (D01) gelegen ist, und einen Wärmetauscher (H) umfasst, der zwischen den zwei Hydraulikkreisen angeordnet ist und fünf Meter niedriger als die Tanke für entlüftetes Meerwasser gelegen ist.

2. System nach Anspruch 1, welches einen Kondenser (C) und eine Rohrleitung (P) umfasst, welche die Verdampfungskammer (EC) mit dem Kondenser verbindet, wobei der Ausgang des Kondensers eine Wassersäulendichtung ist.

3. System nach Anspruch 2, wobei die Rohrleitung (P) eine Vielzahl von Kondensatableitern (S) zum Fangen des flüssigen Wassers umfasst, das in der Rohrleitung kondensieren kann, wobei jeder Kondensatableiter als eine Wassersäulendichtung gebildet ist.

4. System nach einem der vorhergehenden Ansprüche, wobei der Verdampfungsteil (EP) einen Dampfkessel zur Erzeugung von Dampf bei atmosphärischem Druck oder einem höheren Druck umfasst.

5. System nach einem der vorhergehenden Ansprüche, umfassend eine Reihe von Verdampfungsteilen (EP).

6. System nach einem der vorhergehenden Ansprüche, umfassend eine Reihe von Kondensern (C).

7. Verwendung des Systems des Anspruchs 1 zur Entsalzung von Meerwasser, wobei entlüftetes Meerwesser in geschlossenem Kreis zwischen einem der Tanke für entlüftetes Meerwasser (D11, D12) und der Verdampfungskammer (EC) in Umlauf gebracht wird, wobei der Druck in dem einen Tank und in der Kammer nicht höher als der Wasserdampfdruck bei Raumtemperatur liegt.

8. Verwendung des Systems des Anspruchs 1 nach Anspruch 7, wobei der offene Hydraulikkreis dem geschlossenen Hydraulikkreis die Wärme liefert, die bei der in der Verdampfungskammer (EC) stattfindenden Wasserverdampfung verloren ist.

9. Verwendung des Systems des Anspruchs 1 zur Entsalzung von Meerwasser, wobei das Verfahren die folgenden Schritte umfasst:
(a) das Abschalten von einem der Tanke für entlüftetes Meerwasser (D11, D12) aus dem geschlossenem Hydraulikkreis und das Schalten des anderen Tanks für entlüftetes Meerwasser an den geschlossenen Hydraulikkreis;
(b) das Wiederauffüllen des aus dem geschlossenem Hydraulikkreis abgeschalteten Tanks für entlüftetes Meerwasser mit entlüftetem Meerwasser;
(c) das Schalten des wiederaufgefüllten Tanks für entlüftetes Meerwasser an den geschlossenen Hydraulikkreis und das Abschalten des anderen Tanks für entlüftetes Meerwasser.

10. Verwendung des Systems des Anspruchs 1 zur Entsalzung von Meerwasser, wobei das Verfahren die folgenden Schritte umfasst:
(i) das Füllen eines Tanks für entlüftetes Meerwasser (D11; D12) mit Wasser aus dem Rohmeerwassertank (D01) und das Erlauben des Luftausgangs durch das obere Ventil des Tanks für entlüftetes Meerwasser;
(ii) bei geschlossenem oberem Ventil, das gravitative Drainieren eines Wasservolums aus dem Tank für entlüftetes Meerwasser in den Tank für Rohmeerwasser hinein, wodurch ein Vakuum im ersteren Tank erzeugt wird;
(iii) das eine gewisse Zeit erfordernde Entgasen des im Tank für entlüftetes Meerwasser enthaltenen Meerwassers;
(iv) bei geschlossener Verbindung zwischen dem Rohmeerwassertank und dem Tank für entlüftetes Meerwasser, das Nachfüllen des Letzeren mit Wasser aus dem Reservoir für entlüftetes Meerwasser (D02) und das Erlauben des Luftausgangs durch das obere Ventil;
(v) bei geschlossenem oberen Ventil, das gravitative Drainieren eines Volums von entlüftetem Meerwasser aus dem Tank für entlüftetes Meerwasser in das Reservoir für entlüftetes Meerwasser hinein, wodurch ein Vakuum in dem Tank nochmals erzeugt wird;
(vi) das mehrfache Wiederholen der Schritte (iii) bis (v).

## Revendications

1. Système de désalinisation de l'eau de mer ayant une partie d'évaporation (EP) comprenant une chambre d'évaporation (EC) et deux citernes (D11, D12) pour l'eau de mer désaérée pour la chambre d'évaporation, **caractérisé en ce qu'**il comprend aussi un réservoir (D02) pour l'eau de mer désaérée qui est situé à un niveau de dix mètres au-dessous des citernes pour l'eau de mer désaérée (D11, D12) et qui est connecté à un d'eaux, étant l'autre citerne pour l'eau de mer désaérée connecté à la chambre d'évaporation pour former avec elle un circuit hydraulique fermé, comprenant les citernes pour l'eau de mer désaérée une soupape supérieure et étant disposés en parallèle dans le circuit hydraulique fermé et situés essentiellement à la même hauteur que ladite chambre d'évaporation et au moins dix mètres au-dessus du niveau de la mer, comprenant en outre la partie d'évaporation un circuit hydraulique ouvert pour l'eau de mer brute qui commence et se termine dans la mer et qui comprend une citerne pour l'eau de mer brute (D01), situé essentiellement au même niveau que le réservoir pour l'eau de mer désaérée (D02), et une citerne pour saumure (D03) qui est connectée à un des citernes pour l'eau de mer désaérée et qui est situé essentiellement au même niveau que la citerne pour l'eau de mer brute (D01), et un échangeur de chaleur (H) disposé entre lesdits deux circuits hydrauliques et situé à un niveau qui est cinq mètres au-dessous des citernes pour l'eau de mer désaérée.

2. Système selon la revendication 1, qui comprend un condenseur (C) et un pipeline (P) qui relie la chambre d'évaporation (EC) avec ledit condenseur, étant la sortie du condenseur un joint de colonne d'eau.

3. Système selon la revendication 2, dans lequel le pipeline (P) comprend une pluralité de purgeurs de vapeur (S) destinés à recueillir l'eau liquide qui peut condenser dans le pipeline, étant chaque purgeur de vapeur formé en tant qu'un joint de colonne d'eau.

4. Système selon l'une quelconque des revendications précédentes, dans lequel la partie d'évaporation (EP) comprend une chaudière pour produire du vapeur à pression atmosphérique ou à une pression supérieure.

5. Système selon l'une quelconque des revendications précédentes, comprenant une série de parties d'évaporation (EP).

6. Système selon l'une quelconque des revendications précédentes, comprenant une série de condenseurs (C).

7. Utilisation du système de la revendication 1 pour désaliniser l'eau de mer, dans laquelle on fait circuler de l'eau de mer désaérée en circuit fermé entre un des citernes pour l'eau de mer désaérée (D11, D12) et la chambre d'évaporation (EC), étant la pression dans ladite une citerne et dans ladite chambre non supérieure à la pression de vapeur d'eau à température ambiante.

8. Utilisation du système de la revendication 1 selon la revendication 7, dans laquelle le circuit hydraulique ouvert alimente au circuit hydraulique fermé la chaleur perdue dans l'évaporation de l'eau qui se produit dans la chambre d'évaporation (EC).

9. Utilisation du système de la revendication 1 pour la désalinisation de l'eau de mer, comprenant le procédé les étapes suivantes :
(a) débrancher un des citernes pour l'eau de mer désaérée (D11, D12) du circuit hydraulique fermé et connecter l'autre citerne pour l'eau de mer désaérée avec le circuit hydraulique fermé ;
(b) recharger avec de l'eau de mer désaérée la citerne pour l'eau de mer désaérée débranché du circuit hydraulique fermé ;
(c) relier la citerne rechargé pour l'eau de mer désaérée avec le circuit hydraulique fermé et débrancher de celui-ci l'autre citerne pour l'eau de mer désaérée.

10. Utilisation du système de la revendication 1 pour désaérer l'eau de mer, comprenant le procédé les étapes suivantes :
(i) remplir une citerne pour l'eau de mer désaérée (D11 ; D12) avec de l'eau du citerne pour l'eau de mer brute (D01) et permettre la sortie d'air au travers de la soupape supérieure de ladite citerne d'eau de mer désaérée ;
(ii) avec ladite soupape supérieure fermée, drainer gravitationnellement un volume d'eau de ladite citerne pour l'eau de mer désaérée vers la citerne pour l'eau de mer brute, créant ainsi un vacuum dans la première des dites citernes ;
(iii) permettre pendant un certain temps le dégazage de l'eau de mer dans la citerne pour l'eau de mer désaérée ;
(iv) avec la connexion entre la citerne pour l'eau de mer brute et la citerne pour l'eau de mer désaérée fermée, remplir cette dernière avec de l'eau du réservoir pour l'eau de mer désaérée (D02) et permettre la sortie d'air au travers de la soupape supérieure;
(v) avec la soupape supérieure fermée, drainer gravitationnellement un volume d'eau de mer désaérée de la citerne pour l'eau de mer désaérée vers le réservoir pour l'eau de mer désaérée, créant ainsi à nouveau un vacuum dans la dite citerne ;
(vi) répéter les étapes (iii) à (v) à plusieurs reprises.
